# FASCICULE DE BREVET EUROPEEN

(11) **EP 2 893 709 B1**
(45) Date de publication et mention de la délivrance du brevet: **25.08.2021**
(21) Numéro de dépôt: 13767033.7
(22) Date de dépôt: 03.09.2013
(51) Int. Cl.: H04N 21/418, H04N 21/4623

(54) **PROCÉDÉ DE COMMANDE DE L'AFFICHAGE D'UN TÉLÉVISEUR NUMÉRIQUE**
VERFAHREN ZUR STEUERUNG DER ANZEIGE EINES DIGITALEN FERNSEHGERÄTES
METHOD FOR CONTROLLING THE DISPLAY OF A DIGITAL TELEVISION SET

(30) Priorité: 10.09.2012 FR 1258447
(43) Date de publication de la demande: 15.07.2015
(73) Titulaire: Ifeelsmart, 75009 Paris (FR)
(72) Inventeur: SHRIQUI, Shy, 75009 Paris (FR); BRINGUE, Xavier, 92250 La Garenne Colombes (FR); GUERINEL, Jérémie, 75015 Paris (FR)
(74) Mandataire: IP Trust
(86) Numéro de dépôt international: PCT/FR2013/052017
(87) Numéro de publication internationale: WO 2014/037660

(56) Documents cités:
- US-A1- 2005 050 160
- US-A1- 2009 144 766
- None

## Description

La présente invention concerne le domaine de la télévision numérique et plus particulièrement la télévision numérique associée ou intégrant un décodeur de télévision numérique permettant à un abonné de recevoir une multitude de programmes, ou services, de télévision.

On entendra par « téléviseur » au sens du présent brevet un téléviseur connecté à un décodeur périphérique ainsi qu'un téléviseur intégrant un décodeur.

L'équipement d'un utilisateur fait intervenir plusieurs acteurs :
- Le fabricant de téléviseur ou de décodeur générique et leurs vendeurs
- L'opérateur de services, fournissant un abonnement associé à un décodeur propriétaire ou à une carte commandant un décodeur ou un téléviseur générique
- Des fournisseurs de service et de contenus accessibles au travers ou en dehors des offres opérateurs, par exemple les catalogues de contenus de type vidéo à la demande, les plateformes d'applications (Appstores), services de vidéo sur Internet,...

On entend par Opérateur de Services, tout opérateur de contenus et/ou de Services fournissant l'accès à des programmes, contenus, services de télévisions, de contenus numériques audiovisuels ou applicatifs, de métadonnées liées, de catalogues de contenus numériques audiovisuels ou applicatifs.

Dans l'état de la technique, chaque décodeur mis en location est généralement programmé pour décrypter les services de télévision émis par un unique opérateur. Une application particulière, dite application de verrouillage, de la mémoire de programmes qui bloque le fonctionnement du décodeur sur le seul opérateur autorisé par ledit décodeur. Dans la plupart des cas, le verrouillage est activé lors de la fabrication du décodeur.

### Etat de la technique

On connaît dans l'état le brevet européen EP1814331 décrit un procédé d'identification, au sein d'un décodeur de télévision numérique, d'un opérateur autorisé, ledit décodeur comportant notamment une mémoire de données, une mémoire de programmes et un module de contrôle d'accès pour vérifier qu'une carte de gestion des droits insérée dans le décodeur est une carte autorisée, ladite carte comportant, dans une unité de mémoire, une information relative à son appartenance à un opérateur particulier, caractérisé en ce que le procédé comporte les différentes étapes consistant à :
- mémoriser dans la mémoire de données une liste d'opérateurs autorisés, ladite liste comportant au moins un premier opérateur (code 1) et un deuxième opérateur (code 2);
- contrôler, au moyen du module de contrôle d'accès, que l'opérateur particulier auquel appartient la carte est un des opérateurs de la liste d'opérateurs autorisés ; le cas échéant seulement, autoriser un fonctionnement habituel du décodeur.

On connaît aussi le brevet américain US2009/00144766 décrivant un décodeur-câble « universel » permettant l'installation de l'application de décryptage ultérieurement à la vente, par un système d'authentification et de téléchargement via le signal vidéo multi-diffusé (broadcast).

Cette solution de l'art antérieur permet de télécharger via le signal multi-diffusé un fichier contenant les clés d'activation de nouveaux services.

### Inconvénients de l'état de la technique

La solution proposée par le brevet US2009/00144766 ne permet pas de s'adapter à l'offre de services particulière de chaque opérateur, et ne peut être mise en œuvre en l'absence d'un opérateur. Cette solution ne permet pas non plus de modifier l'infographie, mais seulement de commander la couche sécurité du décodeur.

La solution proposée par le brevet EP1814331 ou par l'article Cutts de l'art antérieur est très restrictive. Elle est compatible seulement avec des situations où des opérateurs (a) utilisent une carte à mémoire de gestion des droits et (b) préalablement enregistrés dans la mémoire de l'opérateur et dont (c) les paramètres sont enregistrés lors de la fabrication du décodeur.

Cette solution de l'art antérieur n'est pas adaptée à un contexte de télévision connectée, impliquant l'émergence d'offres de services sans opérateurs (« over the top »).

Dans ce cas, le lien impératif entre l'accès aux services et la fourniture par un opérateur d'un décodeur au moment de l'abonnement n'est plus approprié.

Par ailleurs, dans les solutions de l'art antérieur, les données de configuration pour chaque opérateur sont enregistrées a priori dans la mémoire du décodeur, au moment de sa fabrication. Or, les services disponibles actuellement changent très rapidement, et la solution proposée ne permet pas de répondre de manière pleinement satisfaisante aux évolutions rapides.

La solution de l'art antérieur est également limitée à un basculement entre les opérateurs préenregistrés sans possibilité d'ajouter dynamiquement un opérateur ou de modifier dynamiquement les paramètres d'un opérateur préenregistré.

Enfin la solution de l'art antérieur ne permet pas de gérer un fonctionnement hybride avec opérateur/sans opérateur, par exemple pour un équipement commercialisé hors réseau opérateur. Elle ne permet pas non plus la synchronisation avec des périphériques connectés.

Cf [0022]

Le fichier transmis permet de mettre à jour le bouquet de service, par exemple de décrypter une chaine additionnelle, mais pas la configuration du téléviseur, notamment de son infographie, et des services interactifs autres que le simple choix d'une chaine.

### Solution apportée par l'invention

Contrairement aux solutions de l'art antérieur, l'objectif premier de l'invention n'est pas la configuration a posteriori du contrôle d'accès, mais la personnalisation des fonctionnalités d'un téléviseur commercialisé selon un mode initial universel.

Afin de répondre aux inconvénients de l'art antérieur, la présente invention concerne selon son acception la plus générale un procédé de commande de l'affichage d'un téléviseur de données multimédia combinant un ou plusieurs contenus graphiques ou vidéo ainsi que des zones d'information contextuelle de l'état du téléviseur et des fonctionnalités disponibles caractérisé en ce qu'il comporte une étape d'installation sur le téléviseur d'une application logicielle sécurisée comportant des moyens dédiés à l'exécution d'une opération de personnalisation du contexte infographique ainsi que de l'ouverture de connecteurs dynamiques vers des fonctionnalités, en fonction d'au moins une information provenant d'un moyen externe.

L'invention permet de rendre totalement indépendant la fabrication et fourniture du téléviseur (ou du décodeur) générique, et son usage dans le cadre de l'offre d'un opérateur voire indépendant de l'opérateur (modèle « over the top »).

Le téléviseur comprend une mémoire dans laquelle est enregistré un identifiant unique. Lors de l'étape d'installation initiale ou ultérieure, une application informatique est exécutée par le téléviseur, pour réaliser les tâches suivantes :
- établissant d'une session via un protocole internet avec une plateforme dont l'adresse est enregistrée directement ou indirectement dans une mémoire du téléviseur
- transmission par le téléviseur à la plateforme de l'identifiant unique du téléviseur et de l'identifiant du fournisseur de service provenant du moyen externe, par exemple une carte à mémoire ou tout autre moyen connu
- vérification par la plateforme d'une association valide desdits identifiants (identifiant unique du téléviseur et identifiant du fournisseur de service). Cette vérification permet de limiter les risques de fraude ou de détournement de la configuration par un utilisateur non autorisé : la détention frauduleuse du second identifiant ne permet pas de bénéficier d'une nouvelle configuration pour un tiers qui ne détient pas le téléviseur sur lequel est enregistré le premier identifiant
- en cas d'absence d'association valide, le téléviseur reste dans son état initial, et éventuellement affiche un message d'information sur l'absence de validité de la combinaison entre l'identifiant de l'équipement et l'identifiant du fournisseur de service
- en cas de validité de l'association, transmission par la plateforme d'un fichier de configuration enregistré dans la mémoire du téléviseur, et exécution d'un programme de configuration prenant en compte les paramètres contenus dans ce fichier de configuration.

La mise en œuvre de ces tâches nécessite une capacité de dialogue bidirectionnelle entre le téléviseur et la plateforme associée au téléviseur. Une telle solution n'est pas possible avec des procédés de l'art antérieur tel que celui proposé par le brevet US2009/144766. Dans ce document, il n'est évoqué aucun identifiant du terminal permettant d'identifier ce dernier. Le fichier de configuration est « poussé » par le réseau, dans un flux multi-diffusé.

L'invention permet ainsi de disposer d'un téléviseur générique avec sa propre offre de services évolutive dynamiquement selon le choix du fabricant, ce dernier déterminant les offres de services au travers d'une base de données externe, par exemple sur un serveur. Elle permet aussi de recevoir des offres de services d'opérateurs partenaires du fabricant, la liste des opérateurs étant évolutive dynamiquement ainsi que les services proposés par ces opérateurs.

Elle permet aussi de faire évoluer la configuration pour passer de l'accès à un catalogue de vidéo à la demande provenant d'une plateforme de distribution à un autre catalogue.

Elle permet aussi de garantir la sécurité des modifications, en évitant le piratage d'un abonnement d'un autre utilisateur, par exemple par captation du flux sur le câble dans un immeuble collectif ou d'un flux multidiffusé.

Selon une première variante, ledit identifiant provenant d'un moyen externe est enregistré dans une carte à mémoire sécurisée comportant en outre des moyens de traitement de fonctions cryptographiques.

Selon une deuxième variante, ledit identifiant provenant d'un moyen externe est transmis par le réseau d'un opérateur fournisseur de contenus et/ou de services selon un mode d'identification et d'authentification par un serveur.

Selon une troisième variante, ledit identifiant provenant d'un moyen externe est constitué par une information échangée avec le point d'accès réseau local de l'opérateur de services.

Selon une quatrième variante, ledit identifiant provenant d'un moyen externe est déterminé par un moyen d'authentification de l'utilisateur.

Selon une cinquième variante, ledit identifiant provenant d'un moyen externe est constitué par un identifiant provenant d'un dispositif tiers connecté à l'entrée HDMI du téléviseur (ou du décodeur)

Selon une sixième variante, ledit identifiant est inscrit par composition dans le signal vidéo transmis au téléviseur (ou au décodeur)

Avantageusement, les données de personnalisation sont enregistrées dans un profil sous forme de fichier de configuration de type XML, contenant les identifiants de services disponibles, ainsi que les identifiants d'infographie propres au profil

Selon un mode de mise en œuvre particulier, les données de personnalisation des fonctions activables sont enregistrées dans un fichier de configuration de type XML, contenant les paramètres de configuration des services disponibles par l'ouverture des connecteurs de données correspondants.

Selon un mode de mise en œuvre particulier, les données de personnalisation d'un téléviseur sont propagées sur une partie au moins des périphériques connectés.

Avantageusement, les données d'infographie sont enregistrées dans un fichier de configuration de type XML.

De préférence, les données de personnalisation de services sont enregistrées dans un ou plusieurs connecteurs sous forme de fichiers binaires dont l'exécution locale après installation sur le décodeur permet l'accès auxdits services.

Selon une variante avantageuse, le procédé comporte des étapes de mise à jour des connecteurs enregistrés sur ledit décodeur.

Selon un mode de mise en œuvre particulier, le procédé comporte des connecteurs pour un service de contenus interactifs lié à un contenu diffusé, permettant à une chaine de télévision d'associer dynamiquement à un contenu diffusé un environnement de liens vers des contenus tiers.

L'invention concerne également un téléviseur numérique caractérisé en ce qu'il comporte des moyens de commande de l'affichage de données multimédia combinant un ou plusieurs contenus graphiques ou vidéo ainsi que des zones d'information contextuelle de l'état du téléviseur et des fonctionnalités disponibles et une application logicielle sécurisée comportant des moyens dédiés à l'exécution d'une opération de personnalisation du contexte infographique ainsi que de l'ouverture de connecteurs dynamiques vers des fonctionnalités, en fonction d'au moins une information provenant d'un moyen externe.

De préférence, le téléviseur numérique selon l'invention comporte une pluralité de connecteurs activables dynamiquement pour accéder à des services en fonction de ladite information provenant d'un moyen externe.

### Description détaillée d'un exemple non limitatif de mise en œuvre de l'invention

L'invention sera mieux comprise à la lecture de la description qui suit, correspondant à des exemples non limitatifs de réalisation, illustrés par les dessins annexés où :

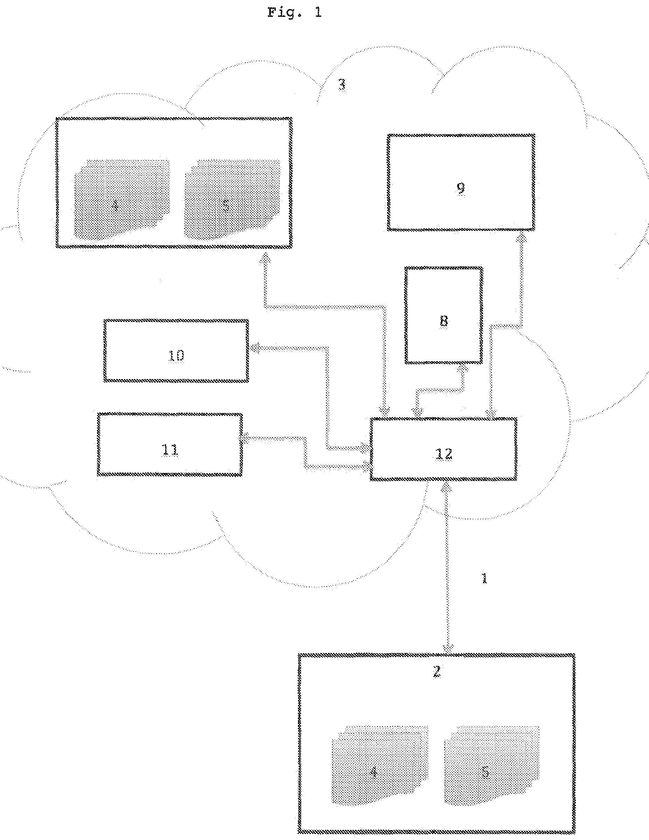

- la figure 1 représente une vue schématique de l'architecture générale
- la figure 2 représente une vue générale de l'architecture du décodeur.

L'invention met en œuvre un décodeur (2) (« set top box ») de type connu, qui peut être intégré dans un téléviseur ou constituer par un périphérique connecté à un téléviseur.

On entendra au sens du présent brevet par « téléviseur » aussi bien un téléviseur intégrant un décodeur qu'un ensemble formé par un téléviseur et un décodeur extérieur raccordable au téléviseur.

Le décodeur (2) comporte une zone de mémoire (40) pour l'enregistrement d'objets informatiques de personnalisation provenant d'une porte d'accès réseau (1) à des informations provenant d'un serveur (3) d'applications avec lequel le décodeur (2) communique selon un protocole internet.

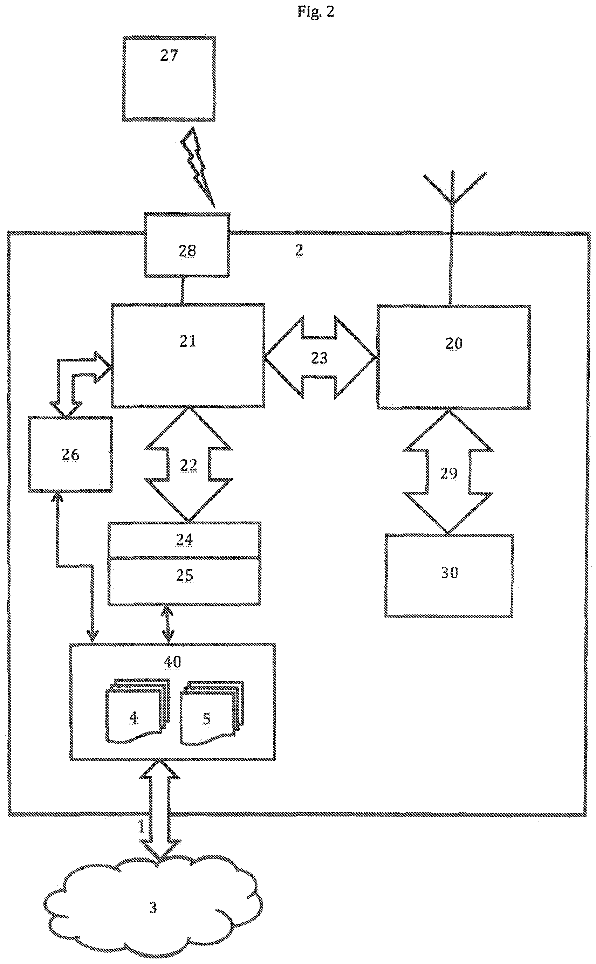

L'architecture générale du décodeur est représentée en figure 2. Il comprend de manière connue un module de réception et de démultiplexage (20), un microprocesseur (21), un premier bus de communication bidirectionnel (22, 23), une mémoire de programmes (24), la mémoire de données (25), un module de contrôle d'accès (26).

Le pilotage du décodeur est généralement assuré par une télécommande (27) communiquant par une liaison radiofréquence, wifi ou infrarouge grâce à un capteur (28) équipant le décodeur (2). Cette télécommande (27) est constituée soit par un équipement dédié, soit par un téléphone portable ou une tablette sur lequel est installée une application exécutable pour assurer les fonctions de pilotage du décodeur (2).

Une liaison (29) assure la transmission des signaux provenant du module de réception (20) vers le module de décryptage et de décompression audio/vidéo (30).

La mémoire de programme (24) et de données (25) ainsi que le module de contrôle d'accès (26) sont reliés à l'ensemble de mémoires (40) dans lequel sont enregistrés les connecteurs (4) et les modules d'extension (5), téléchargés depuis une plateforme de service située sur le serveur d'applications (3) .

Le serveur d'applications (3) donne l'accès à des objets numériques comprenant :
- une collection de connecteurs (4), de type « clients de plateformes de service »
- une collection de modules d'extension de type « plug-in » (5) destinés à ajouter des fonctionnalités et à adapter l'application de gestion de l'interface du décodeur (2)

Le serveur d'applications (3) comprend un gestionnaire de mise à jour (10), un gestionnaire de profils (11) et une application serveur (12).

### Description du gestionnaire de profil

On détermine un profil pour chaque couple « fabricant/opérateur », ainsi que pour un mode « fabricant seul sans opérateur ».

Ce profil définit une liste de services disponibles pour le couple « fabricant/opérateur » concerné. A chaque service sont associés un ou plusieurs connecteurs.

Chaque profil est associé à un fichier de configuration commandant une infographie spécifique.

Les services et fonctionnalités sont à titre non limitatif du type suivant :
- guide de programmes
- plan de service télévisuel
- catalogue de vidéo à la demande
- plateforme d'application
- plateforme de jeu
- moteur de recommandation
- système de facturation

Un profil est construit par le fabricant en relation le cas échéant avec l'opérateur concerné. Il comporte une première signature unique correspondant à l'identification du décodeur (2) auquel il est destiné, et une seconde signature, associée à l'opérateur de service concerné correspondant à l'identification dudit opérateur par un mécanisme connu (identification du réseau, carte à mémoire,....)

Chaque décodeur (2) est associé physiquement à un premier identifiant du matériel et optionnellement à un ou plusieurs seconds identifiants d'opérateurs. Ce ou ces identifiants sont enregistrés dans une mémoire informatique du décodeur.

En l'absence de second identifiant « opérateur », l'offre de service est celle du fabricant, qui joue alors également le rôle d'opérateur de services.

Lors d'une première installation d'un décodeur (2) ou de sa réinitialisation, ou encore lors de la détection d'un nouvel identifiant opérateur, le décodeur commande l'ouverture d'un échange d'information avec un gestionnaire de profil, installé sur la plateforme de services (3).

La détection d'un nouvel opérateur peut résulter de la détection d'un identifiant opérateur enregistré :
- soit sur une carte à mémoire fournie par l'opérateur de services
- soit par un identifiant du réseau local sur lequel est installé le décodeur (2)
- soit par un identifiant de l'opérateur de télécommunication auquel est abonné l'utilisateur du décodeur
- soit par une authentification de l'utilisateur du décodeur par un dialogue via une interface spécifique
- soit par une authentification initié par le périphérique de commande, par exemple le téléphone mobile embarquant l'identifiant de l'opérateur mobile et habilité à le transmettre au décodeur (2).
- Soit par un identifiant d'un dispositif audiovisuel tiers transmis sur la connexion HDMI au décodeur (2)
- Soit par un identifiant inscrit par composition dans le signal vidéo transmis au décodeur (2)

Ce dialogue va consister à la transmission selon un protocole sécurisé (https, webservice sécurisé, XML-RPC...) par le décodeur au gestionnaire de profil, desdits premier et second identifiants du décodeur concerné.

La reconnaissance de ce couple unique d'identifiants détermine le profil particulier correspondant.

Ce profil est constitué par un ensemble de connecteurs et de fichiers de configuration qui sont transmis au décodeur concernés.

### Description détaillée d'un exemple de connecteur

Les connecteurs (4) sont des applications qui sont destinées à être téléchargées par le décodeur, installées dans la zone mémoire de personnalisation (40). Ces applications sont exécutées en tâche de fond sur le décodeur (2), pour réaliser les communications avec une plateforme de services et pour récupérer les méta-données relatives à la vidéo à la demande (VOD) par exemple, ou aux guides de programmes (EPG), ou boutiques d'applications (appStores). Ces méta-données sont associées à des éléments complémentaires tels que des images, vignettes du contenu VOD, textes,.... Ces méta-données de personnalisation sont enregistrées localement dans la mémoire de personnalisation (40) du décodeur (2) dans le cadre de l'exécution du connecteur (4) par le décodeur (2).

Le décodeur (2) comprend une application générique (6) de gestion de l'interface, dont le fonctionnement est modifié par le ou les modules d'extension (5) téléchargés et installés sur le décodeur (2).

Un premier exemple concerne un connecteur de vidéo à la demande.

Il est constitué par un fichier numérique en code binaire, enregistré sur le serveur d'application. Il est signé par l'opérateur de service avec un identifiant unique dudit connecteur. Le code du connecteur contient :
- une application exécutable sur le décodeur (2) après téléchargement sur le décodeur depuis le serveur d'application (3)
- des méta-données spécifiques à un opérateur. Ces métadonnées comprennent, dans le cas d'un service de vidéo à la demande, les informations textuelles et graphiques décrivant chacun des contenus du catalogue, l'adresse et le mode de lecture desdits contenus, les éventuels mécanismes de sécurité à activer pour permettre la lecture desdits contenus.
- Des informations de configuration de l'infographie spécifique au service considéré.

L'application exécutable réalise les fonctions suivantes :
- elle commande le chargement ou la mise à jour de la base de données locale du catalogue de vidéo à la demande, dans la mémoire du décodeur (2)
- elle active ou désactive les mécanismes de sécurité matérielle ou logicielle du décodeur, nécessaires audit service.

Pour un service de télévision numérique IPTV, il est constitué par un fichier numérique en code binaire, enregistré sur le serveur d'application. Il est signé par l'opérateur de services de télévision numérique considéré, avec un identifiant unique dudit connecteur. Le code du connecteur contient :
- une application exécutable sur le décodeur (2) après téléchargement sur le décodeur depuis le serveur d'application (3)
- des méta-données spécifiques à un opérateur. Ces métadonnées comprennent,
   o un plan de services constitué par une liste des chaînes accessibles par l'utilisateur,
   o les adresses desdites chaines
   o les adresses des mosaïques de programmes
   o les informations du guide de programmes électronique

Le connecteur pour un service de télévision numérique comprend également un fichier de configuration des moyens de sécurisation des flux vidéo de l'opérateur concerné, afin de permettre leur lecture sur le décodeur.

Un troisième exemple concerne un connecteur pour le service de facturation.

Ce connecteur contient les informations qui déterminent également le chemin d'accès à une plateforme de facturation (8), connectée au décodeur. Cette plateforme de facturation (8) gère les transactions avec les opérateurs et notamment les autorisations d'accès à des services ou à des contenus payants, et l'activation ou la désactivation de services ou à de contenus payants. Selon cette première alternative, un connecteur (4) est préinstallé sur le décodeur au moment de sa fabrication.

Un quatrième exemple concerne un connecteur pour un service de contenus interactifs lié à un contenu diffusé.

Un tel service permet à une chaine de télévision d'associer dynamiquement à un contenu diffusé un environnement de liens vers des contenus ou des services tiers, par exemple :
- un lien permettant l'accès à un film à la demande sur une plateforme de vidéo à la demande de la chaine
- un lien exécutant une application proposée par la chaine, cette application étant par exemple un jeu
- un lien vers un site web de la chaine ou d'un partenaire de la chaine...

Ce service est géré par la chaine via un accès spécifique à la plateforme (3), lui permettant de déterminer les liens qu'elle souhaite associer à son contenu.

Le connecteur (4) comporte une application de configuration de l'interface de présentation des données modifiant dynamiquement les paramètres de la requête par défaut générée par l'utilisateur consultant les différents services du décodeur. Les paramètres modifiés prennent en compte les paramètres déterminés par la chaine sur la plateforme de service.

### Description du gestionnaire de mise à jour

Le décodeur comprend également un gestionnaire de mises à jour procédant périodiquement à une vérification des connecteurs (4) et modules d'extension (5) installés sur le décodeur. En cas de détection de la disponibilité de nouveaux connecteurs (4) ou de nouveaux modules d'extension (5) sur la plateforme d'application (3), ce gestionnaire de mises à jour commandera le téléchargement et l'installation des nouveaux objets numériques ou des nouvelles versions des objets numériques préalablement installés.

### Initialisation du système.

Le téléviseur ou le décodeur (2) est livré avec une configuration de service minimale permettant de :
- gérer l'accès à un serveur hébergeant une plateforme de services (3), hébergeant des connecteurs choisis par le fournisseur du décodeur et/ou par un partenaire du fournisseur ainsi qu'un gestionnaire de profils
- exécuter, en l'absence de communication avec ladite plateforme de services (3), une offre de service par défaut par l'intermédiaire d'un connecteur préinstallé par le fabricant du décodeur (2). Ce connecteur préinstallé permet d'accéder aux services associés.

Cette procédure permet d'utiliser un décodeur générique pour la totalité des modes d'exploitation et partenariats entre fournisseurs et opérateurs de services.

Les connecteurs (4) et modules d'extensions (5) sont régulièrement supervisés pour assurer une mise à jour automatique.

Ils peuvent être remplacés ou supprimés en cas de fin de validité ou en cas de changement d'opérateur de services, sans autre intervention sur le décodeur (2) ou le téléviseur. La prise en compte de ces modifications intervient après redémarrage du décodeur (2).

Dans le cas où le téléviseur ou le décodeur est associé à une ou plusieurs télécommandes de type téléphone cellulaire ou tablette, les données de personnalisation, notamment définissant l'interface graphique, sont répercutées sur cet équipement par le décodeur, au moment de l'installation d'un nouveau module d'extension (5) ou de sa mise à jour ou encore lors de la première connexion d'un nouveau périphérique ou d'un changement d'opérateur de service.

## Revendications

1. Procédé de commande de l'affichage d'un téléviseur de données multimédia combinant un ou plusieurs contenus graphiques ou vidéo ainsi que des zones d'information contextuelle de l'état du téléviseur et des fonctionnalités disponibles, ledit téléviseur comprenant une mémoire dans laquelle est enregistré un premier identifiant d'un décodeur (2) et optionnellement un ou plusieurs seconds identifiants d'opérateurs
**caractérisé en ce que** le décodeur (2) du téléviseur est associé physiquement au premier identifiant du téléviseur et à un profil, qui définit une liste de services, et commande,
- en l'absence de second identifiant d'opérateur, l'accès à l'offre de service du fabricant du téléviseur
- lors de la détection du second identifiant d'opérateur , l'ouverture d'un échange d'informations avec un gestionnaire de profil, installé sur une plateforme de services,
le procédé comportant :
- une étape de configuration initiale commandant le fonctionnement du téléviseur par défaut, et
- lors de la détection du second identifiant d'opérateur, une étape d'installation sur le téléviseur d'au moins un fichier de configuration provenant d'un serveur d'applications (3) avec lequel le téléviseur (2) communique de manière bidirectionnelle selon un protocole internet,
o ledit fichier de configuration comportant des moyens dédiés à l'exécution d'une opération de personnalisation du contexte infographique ainsi que de l'ouverture de connecteurs dynamiques (4) vers des fonctionnalités nouvelles et/ou substituées auxdites fonctionnalités par défaut, en fonction d'au moins un identifiant provenant d'un moyen externe,
o lesdites fonctionnalités nouvelles et/ou substituée comprenant une au moins des fonctionnalités d'accès à un catalogue de vidéos à la demande, d'accès à une plateforme de téléchargement d'application ou de jeux, d'enregistrement dans un réseau de contenus diffusés, d'accès à une plateforme de commerce électronique, de personnalisation de l'infographie distincte de l'infographie par défaut, de plateforme de paiement en ligne.

2. Procédé de commande de l'affichage d'un téléviseur selon la revendication 1 **caractérisé en ce que** ledit identifiant provenant d'un moyen externe est enregistré dans une carte à mémoire sécurisée comportant en outre des moyens de traitement de fonctions cryptographiques.

3. Procédé de commande de l'affichage d'un téléviseur selon la revendication 1 **caractérisé en ce que** ledit identifiant provenant d'un moyen externe est transmis par le réseau d'un opérateur fournisseur de contenu selon un mode d'identification et d'authentification par un serveur.

4. Procédé de commande de l'affichage d'un téléviseur selon la revendication 1 **caractérisé en ce que** ledit identifiant provenant d'un moyen externe est constitué par une information échangée avec le point d'accès réseau local de l'opérateur de contenu.

5. Procédé de commande de l'affichage d'un téléviseur selon la revendication 1 **caractérisé en ce que** ledit identifiant provenant d'un moyen externe est constitué par une information correspondant à l'opérateur de télécommunication associé au périphérique connecté de télécommande.

6. Procédé de commande de l'affichage d'un téléviseur selon la revendication 1 **caractérisé en ce que** ledit identifiant provenant d'un moyen externe est déterminé par un moyen d'authentification de l'utilisateur.

7. Procédé de commande de l'affichage d'un téléviseur selon la revendication 1 **caractérisé en ce que** ledit identifiant provenant d'un moyen externe est constitué par une information provenant d'un dispositif audiovisuel tiers, échangée au travers de la connexion HDMI entre le dispositif tiers et le téléviseur ou décodeur (2).

8. Procédé de commande de l'affichage d'un téléviseur selon la revendication 1 **caractérisé en ce que** ledit identifiant provenant d'un moyen externe est constitué par une information inscrite par composition dans le signal video reçu par le téléviseur ou décodeur (2).

9. Procédé de commande de l'affichage d'un téléviseur selon l'une quelconque des revendications 1 à 8 **caractérisé en ce que** les données de personnalisation sont enregistrées dans un profil sous forme de fichier de configuration de type XML, contenant les identifiants de service disponibles, ainsi que les identifiants d'infographie propres au profil.

10. Procédé de commande de l'affichage d'un téléviseur selon l'une quelconque des revendications 1 à 8 **caractérisé en ce que** les données d'infographie sont enregistrées dans un fichier de configuration de type XML.

11. Procédé de commande de l'affichage d'un téléviseur selon l'une quelconque des revendications 1 à 8 **caractérisé en ce que** les données de personnalisation de services sont enregistrées dans un ou plusieurs connecteurs (4) sous forme de fichiers binaires dont l'exécution locale après installation sur le décodeur (2) permet l'accès auxdits services.

12. Procédé de commande de l'affichage d'un téléviseur selon l'une quelconque des revendications précédentes **caractérisé en ce que** les données de personnalisation d'un téléviseur sont propagées sur une partie au moins des périphériques connectés.

13. Procédé de commande de l'affichage d'un téléviseur selon l'une quelconque des revendications précédentes **caractérisé en ce qu'**il comporte des étapes de mise à jour des connecteurs (4) enregistrés sur ledit décodeur (2).

14. Procédé de commande de l'affichage d'un téléviseur selon l'une quelconque des revendications précédentes **caractérisé en ce qu'**il comporte des connecteurs pour un service de contenus interactifs lié à un contenu diffusé, permettant à une chaine de télévision d'associer dynamiquement à un contenu diffusé un environnement de liens vers des contenus tiers.

15. Téléviseur numérique pour la mise en œuvre du procédé selon la revendication 1, **caractérisé en ce qu'**il comporte des moyens de commande de l'affichage de données multimédia combinant un ou plusieurs contenus graphiques ou vidéo ainsi que des zones d'information contextuelle de l'état du téléviseur et des fonctionnalités disponibles, **en ce qu'**il comprend une mémoire dans laquelle est enregistré un premier identifiant d'un décodeur (2) et optionnellement un ou plusieurs seconds identifiants d'opérateurs, **en ce que** le décodeur (2) du téléviseur est associé physiquement au premier identifiant du téléviseur et à un profil, qui définit une liste de services, et commande,
- en l'absence de second identifiant d'opérateur, l'accès à l'offre de service du fabricant du téléviseur
- lors de la détection du second identifiant d'opérateur , l'ouverture d'un échange d'informations avec un gestionnaire de profil, installé sur une plateforme de services,
et **en ce qu'**il comprend une application logicielle sécurisée comportant des moyens dédiés à l'exécution d'une opération de personnalisation du contexte infographique ainsi que de l'ouverture de connecteurs dynamiques vers des fonctionnalités, en fonction d'au moins une information provenant d'un moyen externe,
le procédé comportant :
- une étape de configuration initiale commandant le fonctionnement du téléviseur par défaut, et
- lors de la détection du second identifiant d'opérateur, une étape d'installation sur le téléviseur d'au moins un fichier de configuration provenant d'un serveur d'applications (3) avec lequel le téléviseur (2) communique de manière bidirectionnelle selon un protocole internet,
o ledit fichier de configuration comportant des moyens dédiés à l'exécution d'une opération de personnalisation du contexte infographique ainsi que de l'ouverture de connecteurs dynamiques (4) vers des fonctionnalités nouvelles et/ou substituées auxdites fonctionnalités par défaut, en fonction d'au moins un identifiant provenant d'un moyen externe,
o lesdites fonctionnalités nouvelles et/ou substituée comprenant une au moins des fonctionnalités d'accès à un catalogue de vidéos à la demande, d'accès à une plateforme de téléchargement d'application ou de jeux, d'enregistrement dans un réseau de contenus diffusés, d'accès à une plateforme de commerce électronique, de personnalisation de l'infographie distincte de l'infographie par défaut, de plateforme de paiement en ligne.

16. Téléviseur numérique selon la revendication précédente **caractérisé en ce qu'**il comporte une pluralité de connecteurs activables dynamiquement pour accéder à des services en fonction de ladite information provenant d'un moyen externe.

## Patentansprüche

1. Verfahren zum Steuern der Anzeige eines Multimediadaten-Fernsehgeräts, das einen oder mehrere Grafik- oder Video-Inhalte sowie kontextbezogene Informationszonen über den Zustand des Fernsehgeräts und verfügbare Funktionen kombiniert, wobei das Fernsehgerät einen Speicher umfasst, in dem eine erste Kennung eines Decoders (2) gespeichert ist und optional eine oder mehrere zweite Anbieterkennungen,
**dadurch gekennzeichnet, dass** der Decoder (2) des Fernsehgeräts mit der ersten Kennung des Fernsehgeräts und einem Profil physisch zugeordnet ist, das eine Liste von Diensten definiert, und steuert
- bei Abwesenheit einer zweiten Anbieterkennung, den Zugriff auf das Diensteangebot des Herstellers des Fernsehgeräts,
- bei Erkennen der zweiten Anbieterkennung, das Eröffnen eines Informationsaustauschs mit einem Profilmanager, der auf einer Diensteplattform installiert ist,
wobei das Verfahren aufweist:
- einen ersten Konfigurationsschritt, der den Betrieb des Fernsehgeräts standardmäßig steuert, und
- bei Erkennen der zweiten Anbieterkennung, einen Installationsschritt mindestens einer Konfigurationsdatei aus einem Anwendungsserver (3), auf dem Fernsehgerät, mit dem das Fernsehgerät (2) gemäß einem Internetprotokoll bidirektional kommuniziert,
o wobei die Konfigurationsdatei Mittel umfasst, die für die Ausführung einer Personalisierungsoperation des Infografik-Kontexts sowie zum Öffnen dynamischer Konnektoren (4) für neue Funktionen bestimmt sind und/oder die die Standardfunktionen ersetzen, in Abhängigkeit von mindestens einer Kennung aus einem externen Mittel,
o wobei die neuen und/oder ersetzten Funktionen mindestens eine der Funktionen Zugriff auf einen Videoabruf-Katalog, Zugriff auf eine Plattform zum Herunterladen von einer Anwendung oder von Spielen, Speichern in einem Netz von verbreiteten Inhalten, Zugriff auf eine Plattform des elektronischen Geschäftsverkehrs, Personalisierung der Infografik, die von der standardmäßigen Infografik unterschiedlich ist, einer Online-Zahlungsplattform umfassen.

2. Verfahren zum Steuern der Anzeige eines Fernsehgeräts nach Anspruch 1, **dadurch gekennzeichnet, dass** die Kennung aus einem externen Mittel auf einer gesicherten Speicherkarte gespeichert ist, die ferner Mittel zur Verarbeitung von kryptografischen Funktionen umfasst.

3. Verfahren zum Steuern der Anzeige eines Fernsehgeräts nach Anspruch 1, **dadurch gekennzeichnet, dass** die Kennung aus einem externen Mittel durch das Netz eines Anbieters übertragen wird, der Inhalte gemäß einem Identifizierungs- und Authentifizierungsmodus durch einen Server bereitstellt.

4. Verfahren zum Steuern der Anzeige eines Fernsehgeräts nach Anspruch 1, **dadurch gekennzeichnet, dass** die Kennung aus einem externen Mittel aus einer Information besteht, die mit dem lokalen Netzzugriffspunkt des Inhaltanbieters ausgetauscht wird.

5. Verfahren zum Steuern der Anzeige eines Fernsehgeräts nach Anspruch 1, **dadurch gekennzeichnet, dass** die Kennung aus einem externen Mittel aus einer Information besteht, die dem Telekommunikationsanbieter entspricht, der dem verbundenen Fernsteuerungs-Peripheriegerät zugeordnet ist.

6. Verfahren zum Steuern der Anzeige eines Fernsehgeräts nach Anspruch 1, **dadurch gekennzeichnet, dass** die Kennung aus einem externen Mittel durch ein Authentifizierungsmittel des Benutzers bestimmt wird.

7. Verfahren zum Steuern der Anzeige eines Fernsehgeräts nach Anspruch 1, **dadurch gekennzeichnet, dass** die Kennung aus einem externen Mittel aus einer Information aus einer audiovisuellen Drittvorrichtung besteht, die über die HDMI-Verbindung zwischen der Drittvorrichtung und dem Fernsehgerät oder Decoder (2) ausgetauscht wird.

8. Verfahren zum Steuern der Anzeige eines Fernsehgeräts nach Anspruch 1, **dadurch gekennzeichnet, dass** die Kennung aus einem externen Mittel aus einer Information besteht, die durch Komposition in das vom Fernsehgerät oder Decoder (2) empfangene Videosignal eingeschrieben ist.

9. Verfahren zum Steuern der Anzeige eines Fernsehgeräts nach einem der Ansprüche 1 bis 8, **dadurch gekennzeichnet, dass** die Personalisierungsdaten in einem Profil in Form einer Konfigurationsdatei vom Typ XML gespeichert werden, die die verfügbaren Dienstekennungen sowie die profilspezifischen Infografik-Kennungen enthält.

10. Verfahren zum Steuern der Anzeige eines Fernsehgeräts nach einem der Ansprüche 1 bis 8, **dadurch gekennzeichnet, dass** die Infografik-Daten in einer Konfigurationsdatei vom Typ XML gespeichert werden.

11. Verfahren zum Steuern der Anzeige eines Fernsehgeräts nach einem der Ansprüche 1 bis 8, **dadurch gekennzeichnet, dass** die Dienste-Personalisierungsdaten in einem oder mehreren Konnektoren (4) in Form von Binärdateien gespeichert werden, deren lokale Ausführung nach der Installation auf dem Decoder (2) den Zugriff auf die Dienste ermöglicht.

12. Verfahren zum Steuern der Anzeige eines Fernsehgeräts nach einem der vorangehenden Ansprüche, **dadurch gekennzeichnet, dass** die Personalisierungsdaten eines Fernsehgeräts über mindestens einen Teil der angeschlossenen Peripheriegeräte verbreitet werden.

13. Verfahren zum Steuern der Anzeige eines Fernsehgeräts nach einem der vorangehenden Ansprüche, **dadurch gekennzeichnet, dass** es Aktualisierungsschritte der auf dem Decoder (2) gespeicherten Konnektoren (4) aufweist.

14. Verfahren zum Steuern der Anzeige eines Fernsehgeräts nach einem der vorangehenden Ansprüche, **dadurch gekennzeichnet, dass** es Konnektoren für einen Dienst interaktiver Inhalte aufweist, der mit einem verbreiteten Inhalt verbunden ist, der es einem Fernsehsender ermöglicht, ein Umfeld von Links zu Drittinhalten mit einem verbreiteten Inhalt dynamisch zuzuordnen.

15. Digitales Fernsehgerät zur Durchführung des Verfahrens nach Anspruch 1, **dadurch gekennzeichnet, dass** es Mittel zum Steuern der Anzeige von Multimediadaten umfasst, die einen oder mehrere Grafik- oder Video-Inhalte sowie kontextbezogene Informationszonen über den Zustand des Fernsehgeräts und verfügbare Funktionen kombinieren, dass es einen Speicher umfasst, in dem eine erste Kennung eines Decoders (2) und optional eine oder mehrere zweite Anbieterkennungen gespeichert sind, dass der Decoder (2) des Fernsehgeräts mit der ersten Kennung des Fernsehgeräts und einem Profil physisch zugeordnet ist, das eine Diensteliste definiert, und steuert
- bei Abwesenheit einer zweiten Anbieterkennung den Zugriff auf das Diensteangebot des Herstellers des Fernsehgeräts,
- bei Erkennen der zweiten Anbieterkennung das Eröffnen eines Informationsaustauschs mit einem Profilmanager, der auf einer Diensteplattform installiert ist,
und dass es eine gesicherte Softwareanwendung umfasst, die Mittel umfasst, die für die Ausführung einer Personalisierungsoperation des Infografik-Kontexts sowie zum Öffnen dynamischer Konnektoren für Funktionen bestimmt sind, in Abhängigkeit von mindestens einer Kennung aus einem externen Mittel,
wobei das Verfahren aufweist:
- einen ersten Konfigurationsschritt, der den Betrieb des Fernsehgeräts standardmäßig steuert, und
- bei Erkennen der zweiten Anbieterkennung, einen Installationsschritt mindestens einer Konfigurationsdatei aus einem Anwendungsserver (3) auf dem Fernsehgerät, mit dem das Fernsehgerät (2) gemäß einem Internetprotokoll bidirektional kommuniziert,
o wobei die Konfigurationsdatei Mittel umfasst, die für die Ausführung einer Personalisierungsoperation des Infografik-Kontexts sowie zum Öffnen dynamischer Konnektoren (4) für neue Funktionen bestimmt sind und/oder die die Standardfunktionen ersetzen, in Abhängigkeit von mindestens einer Kennung aus einem externen Mittel,
o wobei die neuen und/oder ersetzten Funktionen mindestens eine der Funktionen Zugriff auf einen Videoabruf-Katalog, Zugriff auf eine Plattform zum Herunterladen von einer Anwendung oder von Spielen, Speichern in einem Netz von verbreiteten Inhalten, Zugriff auf eine Plattform des elektronischen Geschäftsverkehrs, Personalisierung der Infografik, die von der standardmäßigen Infografik unterschiedlich ist, einer Online-Zahlungsplattform umfassen.

16. Digitales Fernsehgerät nach vorangehendem Anspruch, **dadurch gekennzeichnet, dass** es eine Vielzahl dynamisch aktivierbarer Konnektoren für den Zugriff auf Dienste in Abhängigkeit von der von einem externen Mittel kommenden Information aufweist.

## Claims

1. Method for controlling the display of a multimedia data television set combining one or more graphic or video content items as well as areas of contextual information relating to the state of the television set and available functionalities, said television set comprising a memory in which a first identifier of a decoder (2) and optionally one or more second operator identifiers are stored
**characterized in that** the decoder (2) of the television set is physically associated with the first identifier of the television set and with a profile which defines a list of services, and controls,
- in the absence of a second operator identifier, access to the service offer from the television set manufacturer
- when the second operator identifier is detected, the opening of an exchange of information with a profile manager which is installed on a service platform,
the method comprising:
- a step of initial configuration which controls the default operation of the television set, and
- when the second operator identifier is detected, a step of installing on the television set at least one configuration file originating from an application server (3) with which the television set (2) communicates bidirectionally according to an Internet protocol,
o said configuration file comprising means dedicated to executing an operation for personalizing the infographic context as well as opening dynamic connectors (4) to new functionalities and/or functionalities substituted for said default functionalities, according to at least one identifier originating from an external means,
o said new and/or substituted functionalities comprising at least one of the functionalities of accessing a catalog of videos on demand, accessing an application or game downloading platform, registering in a broadcast content network, accessing an e-commerce platform, personalizing infographics differing from the default infographics, and an online payment platform.

2. Method for controlling the display of a television set according to claim 1, **characterized in that** said identifier originating from an external means is stored in a secure memory card which also comprises means for processing cryptographic functions.

3. Method for controlling the display of a television set according to claim 1, **characterized in that** said identifier originating from an external means is transmitted by the network of a content provider operator according to a mode of identification and authentication by a server.

4. Method for controlling the display of a television set according to claim 1, **characterized in that** said identifier originating from an external means consists of information exchanged with the local network access point of the content operator.

5. Method for controlling the display of a television set according to claim 1, **characterized in that** said identifier originating from an external means consists of information corresponding to the telecommunications operator associated with the connected remote control device.

6. Method for controlling the display of a television set according to claim 1, **characterized in that** said identifier originating from an external means is determined by a user authentication means.

7. Method for controlling the display of a television set according to claim 1, **characterized in that** said identifier originating from an external means consists of information originating from a third-party audiovisual device, exchanged through the HDMI connection between the third-party device and the television or decoder (2).

8. Method for controlling the display of a television set according to claim 1, **characterized in that** said identifier originating from an external means consists of information entered by composition in the video signal received by the television set or decoder (2).

9. Method for controlling the display of a television set according to any of claims 1 to 8, **characterized in that** the personalization data are stored in a profile in the form of an XML-type configuration file, containing the available service identifiers, as well as the profilespecific infographic identifiers.

10. Method for controlling the display of a television set according to any of claims 1 to 8, **characterized in that** the infographic data are stored in an XML-type configuration file.

11. Method for controlling the display of a television set according to any of claims 1 to 8, **characterized in that** the service personalization data are stored in one or more connectors (4) in the form of binary files, the local execution of which, after installation on the decoder (2), allows access to said services.

12. Method for controlling the display of a television set according to any of the preceding claims, **characterized in that** the personalization data of a television set are propagated to at least some of the connected devices.

13. Method for controlling the display of a television set according to any of the preceding claims, **characterized in that** it comprises steps of updating the connectors (4) stored on said decoder (2).

14. Method for controlling the display of a television set according to any of the preceding claims, **characterized in that** it comprises connectors for an interactive content service linked to broadcast content, allowing a television channel to dynamically associate an environment of links to third-party content with broadcast content.

15. Digital television set for implementing the method according to claim 1, **characterized in that** it comprises means for controlling the display of multimedia data combining one or more graphic or video content items as well as areas of contextual information relating to the state of the television set and available functionalities, **in that** it comprises a memory in which a first identifier of a decoder (2) and optionally one or more second operator identifiers are stored, **in that** the decoder (2) of the television is physically associated with the first identifier of the television set and with a profile which defines a list of services, and controls,
- in the absence of a second operator identifier, access to the service offer from the television set manufacturer
- when the second operator identifier is detected, the opening of an exchange of information with a profile manager which is installed on a service platform,
and **in that** it comprises a secure software application comprising means dedicated to executing an operation for personalizing the infographic context as well as opening dynamic connectors to functionalities, according to at least one piece of information originating from an external means,
the method comprising:
- a step of initial configuration which controls the default operation of the television set, and
- when the second operator identifier is detected, a step of installing on the television set at least one configuration file originating from an application server (3) with which the television set (2) communicates bidirectionally according to an Internet protocol,
o said configuration file comprising means dedicated to executing an operation for personalizing the infographic context as well as opening dynamic connectors (4) to new functionalities and/or functionalities substituted for said default functionalities, according to at least one identifier originating from an external means,
o said new and/or substituted functionalities comprising at least one of the functionalities of accessing a catalog of videos on demand, accessing an application or game downloading platform, registering in a broadcast content network, accessing an e-commerce platform, personalizing infographics differing from the default infographics, and an online payment platform.

16. Digital television set according to the preceding claim, **characterized in that** it comprises a plurality of connectors which can be dynamically activated to access services according to said information originating from an external means.
